Europäisches Patentamt

European Patent Office

Office européen des brevets

(19)

(11) Veröffentlichungsnummer: **0 128 855**
**B1**

(12) **EUROPÄISCHE PATENTSCHRIFT**

(45) Veröffentlichungstag der Patentschrift:
01.04.87

(51) Int. Cl.⁴: **B 21 B 39/14**

(21) Anmeldenummer: **84730039.9**

(22) Anmeldetag: **16.04.84**

(54) **Luppenführung für ein Dreiwalzen-Kegelschrägwalzwerk.**

(30) Priorität: **27.05.83 DE 3319771**

(43) Veröffentlichungstag der Anmeldung:
**19.12.84 Patentblatt 84/51**

(45) Bekanntmachung des Hinweises auf die Patenterteilung:
**01.04.87 Patentblatt 87/14**

(84) Benannte Vertragsstaaten:
**FR GB IT SE**

(56) Entgegenhaltungen:
**EP - A - 0 032 536**
**DE - B - 1 271 065**
**FR - A - 837 463**

(73) Patentinhaber: **MANNESMANN Aktiengesellschaft,**
**Mannesmannufer 2, D-4000 Düsseldorf 1 (DE)**

(72) Erfinder: **vom Dorp, Walter, Bolksbuscherstrasse 104,**
**D-4050 Mönchengladbach 2 (DE)**
Erfinder: **Steinbrecher, Heinrich, Am Siegerhof 17,**
**D-4005 Meerbusch 3 (DE)**
Erfinder: **Häusler, Karl Heinz, Lievensteg 5,**
**D-4052 Korschenbroich 1 (DE)**

(74) Vertreter: **Meissner, Peter E., Dipl.-Ing. et al,**
**Herbertstrasse 22, D-1000 Berlin 33 (DE)**

## Beschreibung

1. Die Erfindung betrifft einen Luppenauslauf für ein Schrägwalzwerk gemäss dem Oberbegriff des Patentanspruches 1.

Die in einem Schrägwalzwerk gewalzten Luppen treten mit einer bestimmten Geschwindigkeit aus dem Walzwerk aus und rotieren gleichzeitig um ihre eigene Achse. Ein gedachter Punkt auf der Walzgutoberfläche bewegt sich also in einer Schraubenlinie um die Walzgutachse vorwärts.

In der FR-A-837 463 ist ein Luppenauslauf beschrieben mit über die Länge des Auslaufes angeordneten, gegenüber der Auslauflängsachse schräggestellten Rollen.

Abhängig von der Walzgeschwindigkeit und dem Luppendurchmesser kann die Luppe Drehzahlen von über 1000 min$^{-1}$ erreichen. Würde man bei diesen Geschwindigkeiten die Luppe frei auslaufen lassen, würde sie aus der Unterlage herausgeschleudert werden. Deshalb werden in Schrägwalzwerken entweder geschlossene Führungsrohre oder Rollensysteme eingesetzt, die die Luppe umschliessen, jedoch Vorschub- und Drehbewegung derselben zulassen. Diese Systeme können nach dem Walzen geöffnet werden, um die Luppe nach dem Herausziehen der Dornstange zur Seite auswerfen zu können. Andere bekannte Systeme erlauben ein seitliches Auswerfen von Luppe und Dornstange oder auch einen Abtransport der Luppe in der Walzlinie. Derartige Führungen ermöglichen das Walzen von Luppen, z.B. bei einem Glättwalzwerk, bis zu einer Länge von etwa 16–18 m.

Um längere Luppen, insbesondere kleineren Durchmessers, mit einer Länge von über 20 m bis 40 m und länger zu walzen, wie sie z.B. bei einem 3-Walzen-Kegelschrägwalzwerk erzeugt werden können, sind diese Führungssysteme ungeeignet. Beim Durchlauf der Luppe tritt sowohl Reibung in Längsrichtung als auch in Querrichtung auf, z.B. bei Führungsrollen, um die nicht rotierenden Rollen zu beschleunigen. Aber selbst wenn die Rollen rotieren, tritt immer noch eine Reibung in Längsrichtung auf, da die Rollenachsen in der Regel parallel zur Rohrachse ausgerichtet sind.

Diese Reibung würde dazu führen, dass bei grösseren Luppenlängen die von den Walzen auf die Luppen auszuübende Schub- und Torsionskraft so gross wird, dass entweder der Walzvorgang behindert wird oder aber die Luppe sich verwindet. Beides führt zu Störungen und zu Ausschuss.

Aufgabe der Erfindung ist es, eine Einrichtung zu schaffen, in der eine Luppe grosser Länge sicher geführt und sowohl in der Rotation als auch in der Längsbewegung durch angetriebene Elemente unterstützt wird.

Gelöst wird diese Aufgabe erfindungsgemäss durch die im Patentanspruch 1 angegebenen Merkmale.

Vorzugsweise Ausgestaltungen ergeben sich aus dem Unteranspruch.

Gemäss der Erfindung sind über die gesamte Auslauflänge des Walzwerks angetriebene schräggestellte Rollen mit hyperbolischem Profil angeordnet, die in ihrem Profil dem Durchmesserbereich der Luppen und in der Schräglage und Drehzahl der schraubenlinienförmigen Vorschubbewegung der Luppe angepasst sind. Die Drehzahl dieser Rollen kann in Abhängigkeit von der Luppendrehzahl, d.h. der Walzgeschwindigkeit, geregelt und in der Schräglage dem Steigungswinkel der Schraubenlinie der Luppe angepasst werden.

Gemäss der Ausgestaltung nach Anspruch 3 können zwischen den im Abstand angeordneten Rollen eine Wärmeabstrahlung der Luppe verhindernde Abdeckungen vorgesehen sein. Diese Abdeckungen ermöglichen es, die Wärmeabstrahlung der Luppe, d.h. deren Abkühlung zu verzögern, so dass u.U. vor einer nachfolgenden Weiterbearbeitung auf einen zusätzlichen Nachwärmofen verzichtet werden kann. Voraussetzung für die Anwendung dieser Abdeckungen war die sichere Führung der Luppe durch die hyperbolischen Rollen, weil auf diese Weise die Abdeckungen nahe an die Luppe – ohne dass Beschädigungen auftreten – angeordnet werden können.

Die Erfindung soll nachfolgend anhand der Zeichnungen beschrieben werden.

Dabei zeigt:

Fig. 1 eine Draufsicht auf einen Teil des Luppenauslaufs,

Fig. 2 einen Schnitt gemäss der Linie A–B nach Fig. 1 und

Fig. 3 eine Ansicht C nach Fig. 1.

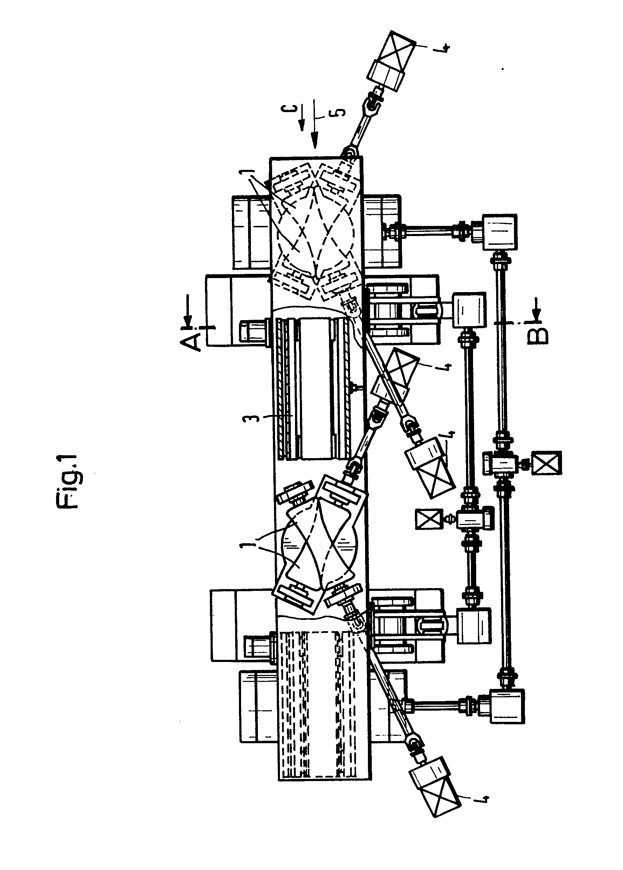

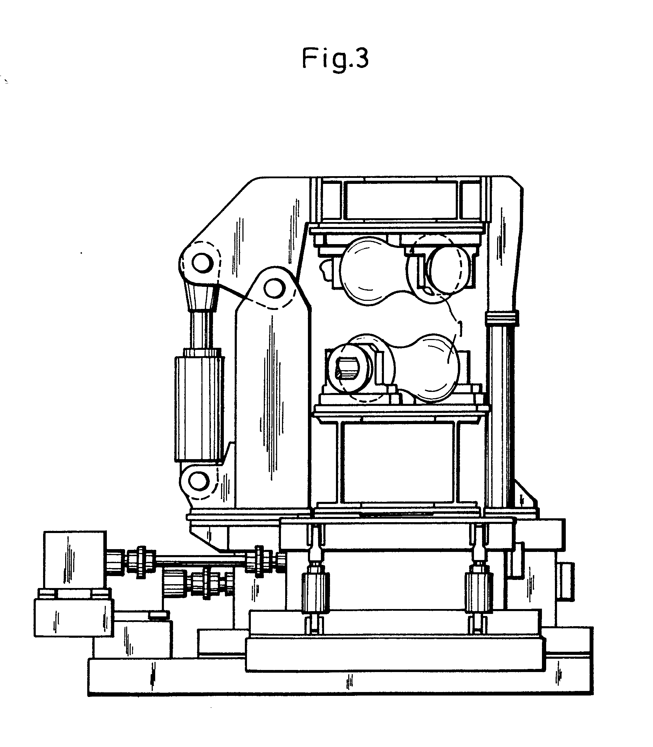

In der Draufsicht der Fig. 1 sind zwei – bezogen auf die Längsrichtung des Auslaufs – hintereinander angeordnete Rollenpaare dargestellt. Diese bestehen aus Rollen 1, von denen die eine Rolle, wie Fig. 3 zeigt, unterhalb, und die andere Rolle gegenüberliegend dazu oberhalb der Auslauflängsachse 2 angeordnet ist.

Die Rollen weisen ein hyperbolisches Profil auf und sind einzeln durch Antrieb 4 drehbar. Die Antriebe ermöglichen es, drehzahlabhängig zu steuern, und ausserdem kann die Winkelstellung der Ober- bzw. Unterrolle jeweils in gewissen Grenzen verändert werden, was im einzelnen in den Figuren nicht dargestellt ist. Die Luppe läuft (in Fig. 1) vom Schrägwalzwerk – das nicht dargestellt ist – kommend, also in Richtung des Pfeiles 5, in den Luppenauslauf ein und wird zwischen den jeweiligen oberen und unteren Rollen der Rollenpaare sicher geführt, wobei – wie eingangs erwähnt – die Rollen in ihrer Schrägstellung und Drehzahl der Vorschubbewegung der Luppe angepasst werden können, so dass Relativbewegungen, die zu Beschädigungen der Luppenoberfläche führen können, ausgeschaltet werden.

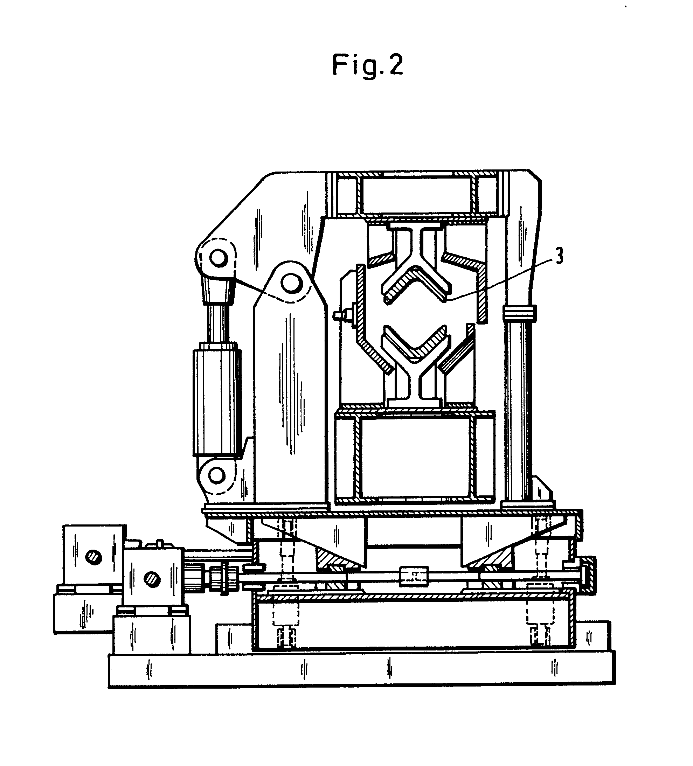

Zwischen den Rollenpaaren können – wie Fig. 1 zeigt – Abdeckungen 3 vorgesehen sein, deren einzelne Ausbildung sich aus der Fig. 2 ergibt. Diese Abdeckungen sorgen dafür, dass der Wärmeabstrahlungsverlust der Luppe zwischen den Rollenpaaren so gering wie möglich gehalten wird.

Weiterhin können zwischen den Rollenpaaren auch Heizelemente wie z.B. Gasbrenner vorhanden sein, die ein Abkühlen der Luppe verhindern bzw. die Temperatur der Luppe erhöhen können.

## Patentansprüche

1. Luppenauslauf für ein Schrägwalzwerk, bestehend aus im Abstand voneinander über die Länge des Auslaufes angeordneten, gegenüber der Auslauflängsachse (2) schräggestellten, die Luppen aufnehmenden, angetriebenen Rollen (1), dadurch gekennzeichnet, dass die Rollen (1) paarweise angeordnet sind und jeweils eine obere und gegenüberliegend eine untere Rolle aufweisen, wobei die Schrägstellung der unteren Rollen einerseits und die Schrägstellung der oberen Rollen andererseits gleich, aber entgegengesetzt ist, dass die Rollen ein hyperbolisches Profil aufweisen und in ihrer Schrägstellung und ihrer Drehzahl einstellbar sind und dass zwischen den Rollen eine Wärmeabstrahlung der Luppe verhindernde Abdeckungen (3) vorgesehen sind.

2. Luppenauslauf nach Anspruch 1, dadurch gekennzeichnet, dass zwischen den Rollen (1) Heizelemente angeordnet sind, die ein Abkühlen der Luppe verhindern.

## Claims

1. Hollow billet outlet for a skew-rolling mill consisting of driven rollers (1) which are arranged at a distance from each other over the length of the outlet, are tilted with respect to the outlet longitudinal axis (2) and which receive the hollow billets, characterised in that the rollers (1) are arranged in pairs and in each case have an upper roller and a lower roller lying opposite, whereby the tilting of the lower rollers on the one hand and the tilting of the upper rollers on the other hand is equal but inverse, in that the rollers have a hyperbolic profile and are adjustable in their tilting and their rotational speed and in that between the rollers covers (3) are provided which prevent heat radiation from the hollow billet.

2. Hollow billet outlet according to Claim 1, characterised in that between the rollers (1) heating elements are arranged, which prevent cooling down of the hollow billet.

## Revendications

1. Sortie de loupes pour un laminoir à cylindres obliques constituée de galets (1) entraînés, recevant les loupes, inclinés par rapport à l'axe longitudinal de la sortie (2), et disposés de façon espacée l'un par rapport à l'autre le long de la longueur de la sortie, caractérisée en ce que les galets (1) sont disposés par paire et, à chaque fois, comportent un galet supérieur et un galet inférieur opposé, l'inclinaison des galets inférieurs, d'une part, et l'inclinaison des galets supérieurs, d'autre part, étant identiques mais opposées, en ce que les galets présentent un profil hyperbolique et sont réglables en ce qui concerne leur inclinaison et leur vitesse de rotation, et en ce que, entre les galets, sont prévus des revêtements (3) empêchant le rayonnement thermique de la loupe.

2. Sortie de loupes selon la revendication 1, caractérisée en ce que, entre les galets (1), sont prévus des éléments de chauffage qui empêchent un refroidissement de la loupe.

Fig.1

# Fig.2

# Fig.3